# EUROPEAN PATENT APPLICATION

(11) **EP 4 542 683 A1**
(43) Date of publication of application: **23.04.2025**
(21) Application number: 23859046.7
(22) Date of filing: 01.08.2023
(51) Int. Cl.: H01M 4/525, H01M 10/0525

(54) **POSITIVE ELECTRODE MATERIAL, PREPARATION METHOD FOR POSITIVE ELECTRODE MATERIAL, POSITIVE ELECTRODE SHEET, AND BATTERY**

(30) Priority: 30.08.2022 CN 202211045711
(71) Applicant: Zhuhai CosMX Battery Co., Ltd., Zhuhai, Guangdong 519180 (CN)
(72) Inventor: LIU, Heli, Zhuhai, Guangdong 519180 (CN); ZENG, Jiajiang, Zhuhai, Guangdong 519180 (CN); LI, Suli, Zhuhai, Guangdong 519180 (CN)
(74) Representative: Murgitroyd & Company
(86) International application number: PCT/CN2023/110604
(87) International publication number: WO 2024/046011

(57) **Abstract**

Disclosed are a positive electrode material, a preparation method of a positive electrode material, a positive electrode plate, and a battery. The positive electrode material includes a sodium-containing oxide, and a chemical formula of the sodium-containing oxide is LiₓNa₁₋ₓCo_{1-z}M_{z}O₂. M includes a metal element or a non-metal element, 0.7 < x < 1, and 0.001 < z < 0.03. During a phase transition process of the sodium-containing oxide from the initial voltage to the cut-off voltage, the first characteristic peak and the second characteristic peak are formed. The angle range of the first characteristic peak is less than the angle range of the second characteristic peak. In this way, the sodium-containing oxide can release more lithium ions at a same voltage, thereby improving a capacity of the positive electrode material, and improving rate performance and cycling performance of the positive electrode material.

## Description

### TECHNICAL FIELD

The present invention relates to the field of battery technologies, and in particular, to a positive electrode material, a preparation method of a positive electrode material, a positive electrode plate, and a battery.

### BACKGROUND

With the development of battery technologies, achieving higher capacities under the condition of stable structures of positive electrode materials has become an urgent need. Currently, a charge and discharge cut-off voltage has transitioned from original 4.2 V or 4.3 V to current 4.45 V or 4.48 V, and will eventually develop toward 4.5 V, 4.6 V, or even higher.

However, an existing positive electrode material undergoes a severe irreversible phase transition when the charge and discharge cut-off voltage exceeds 4.5 V. For example, at 4.55 V, the positive electrode material undergoes a phase transition from an O3 phase to an H1-3 phase, and at a higher voltage, undergoes a phase transition from the H1-3 phase to an O1 phase. Such an irreversible phase transition causes a structure of the positive electrode material to because extremely unstable at a high voltage, leading to severe contraction of a crystal structure. This results in cracking or even destruction of positive electrode material particles, consequently causing problems such as rapid capacity fading and a rapid cycling drop. Although doping and coating the positive electrode material suppress or mitigate harmful effects of these phase transitions to an extent, a capacity loss is caused.

It can be learned that a positive electrode material in the prior art has a problem of low capacity.

### SUMMARY

The present invention provides a positive electrode material, a preparation method of a positive electrode material, a positive electrode plate, and a battery, to solve a problem of low capacity of a positive electrode material in the prior art.

The present invention provides a positive electrode material. The positive electrode material includes a sodium-containing oxide, an angle range of a first characteristic peak of the sodium-containing oxide is less than an angle range of a second characteristic peak, the first characteristic peak is a characteristic peak of the sodium-containing oxide at an initial voltage, the second characteristic peak is a characteristic peak of the sodium-containing oxide at a cut-off voltage, and a chemical formula of the sodium-containing oxide is LiₓNa₁₋ₓCo_{1-z}M_{z}O₂.

M includes a metal element or a non-metal element, 0.7 < x < 1, and 0.001 < z < 0.03.

In one example, during a charge and discharge process from the initial voltage to the cut-off voltage, the sodium-containing oxide includes a plurality of phase transitions, and the plurality of phase transitions are reversible phase transitions.

In one example, each phase transition in the plurality of phase transitions includes an equilibrium potential.

In one example, during the charge and discharge process from the initial voltage to the cut-off voltage, at a first voltage range, the sodium-containing oxide compound coexists as a first phase and a second phase; at a second voltage range, the sodium-containing oxide compound coexists as a third phase and a fourth phase; and at a third voltage range, the sodium-containing oxide compound coexists as a fifth phase and a sixth phase.

In one example, a phase layered structure of the sodium-containing oxide includes a plurality of stacked repeating units, each of the repeating units presents a layered structure in which a first transition metal layer, a lithium oxygen layer, and a second transition metal layer are stacked, and transition metal and lithium atoms respectively occupy octahedral sites.

In one example, M includes at least one element of Al, Mg, Ti, Zr, Mn, Ni, B, P, Y, La, Te, Nb, W, K, or La.

In one example, a median particle size of the sodium-containing oxide ranges from 3 µm to 30 µm.

In one example, a specific surface area of the sodium-containing oxide ranges from 0.2 m²/g to 1 m²/g.

The present invention further provides a preparation method of a positive electrode material, used for preparing the positive electrode material describe above. The method includes:
adding an M salt solution, a precipitating agent, and a complexing agent to a cobalt salt solution to obtain a precipitate, where the M salt solution includes a salt solution including a metal element or a non-metal element;
adding a sodium-containing salt to the coprecipitate to obtain an intermediate product;
adding a lithium-containing salt to the intermediate product to obtain a precursor; and
obtaining the positive electrode material based on the precursor.

In one example, a molar ratio between Co and M in the cobalt salt solution and the M salt solution is (1-z):z, and the coprecipitate includes (Co_{1-z}M_{z})₃O₄, where 0.001 < z < 0.03; the intermediate product includes NaₘCo_{1-z}M_{z}O₂, where 0.65 < m < 1; and the precursor includes LiₓNa₁₋ₓCo_{1-z}M_{z}O₂, where 0.7 < x < 1.

The present invention further provides a positive electrode plate, including a current collector and a coating layer disposed on a surface of one or both sides of the current collector, where the coating layer includes the positive electrode material in the present invention and/or a positive electrode material prepared by using the preparation method of a positive electrode material in the present invention.

The present invention further provides a battery, including a positive electrode plate and a negative electrode plate, where the positive electrode plate includes the positive electrode material in the present invention and/or a positive electrode material prepared by using the preparation method of a positive electrode material in the present invention.

In the present invention, during a phase transition process of the sodium-containing oxide from the initial voltage to the cut-off voltage, the first characteristic peak and the second characteristic peak are formed. The angle range of the first characteristic peak is less than the angle range of the second characteristic peak. In this way, the sodium-containing oxide can release more lithium ions at a same voltage, thereby improving a capacity of the positive electrode material, and improving rate performance and cycling performance of the positive electrode material.

### BRIEF DESCRIPTION OF THE DRAWINGS

To describe technical solutions in embodiments of the present invention more clearly, the following briefly describes the accompanying drawings required for describing embodiments or the prior art. Apparently, the accompanying drawings in the following description show merely some of embodiments of the present invention, and persons of ordinary skill in the art may still derive other drawings from these accompanying drawings without creative efforts.
FIG. 1 shows an in-situ XRD pattern of sodium-containing oxide in a positive electrode material during a charge and discharge process according to an embodiment of the present invention.
FIG. 2 shows charge and discharge curves of sodium-containing oxide in a positive electrode material according to an embodiment of the present invention.
FIG. 3 is a scanning electron microscope image of sodium-containing oxide in a positive electrode material according to an embodiment of the present invention.
FIG. 4 is an in-situ XRD diagram of lithium cobalt oxide in an existing positive electrode material.
FIG. 5 is a flowchart of a preparation method of a positive electrode material according to an embodiment of the present invention.

### DETAILED DESCRIPTION OF THE EMBODIMENTS

The following clearly and completely describes the technical solutions in embodiments of the present invention with reference to the accompanying drawings in embodiments of the present invention. Apparently, the described embodiments are some but not all of embodiments of the present invention. All other embodiments obtained by persons of ordinary skill in the art based on embodiments of the present invention without creative efforts shall fall within the protection scope of the present invention.

In the specification and claims of the present invention, the terms "first", "second", and the like are intended to distinguish between similar objects but do not indicate a particular order or a sequence. It should be understood that the structures used in this way are interchangeable under appropriate circumstances so that embodiments of the present invention can be implemented in an order other than those illustrated or described herein, and the objects distinguished by "first", "second", and the like are generally of a same type. A quantity of the objects is not limited. For example, a first object may be one or more objects. In addition, "and/or" in the specification and claims represents at least one of the associated objects, and the character "/" generally indicates that the associated objects are in an "or" relationship.

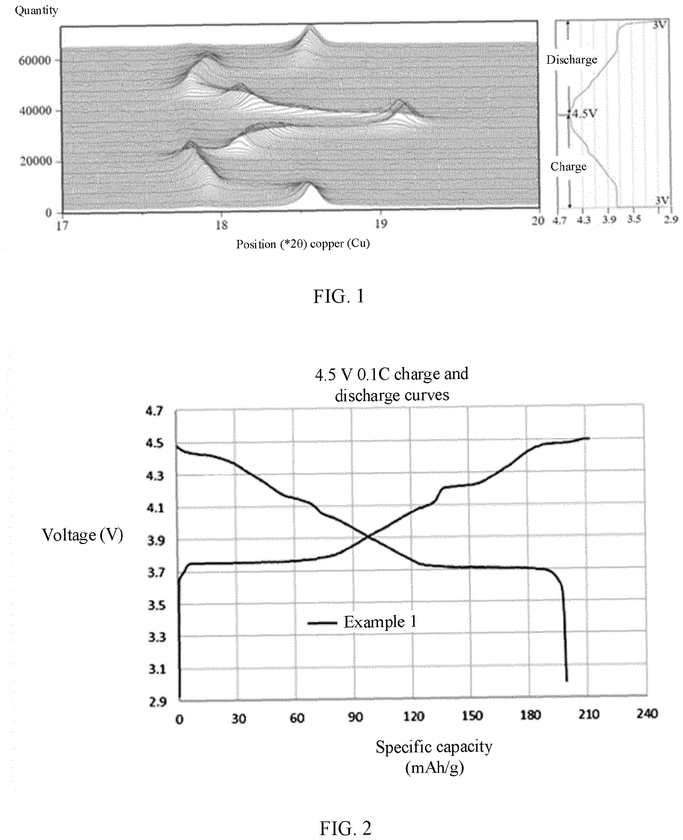

The present invention provides a positive electrode material, as shown in FIG. 1, FIG. 2, and FIG. 3. The positive electrode material includes a sodium-containing oxide, an angle range of a first characteristic peak of the sodium-containing oxide is less than an angle range of a second characteristic peak, the first characteristic peak is a characteristic peak of the sodium-containing oxide at an initial voltage, the second characteristic peak is a characteristic peak of the sodium-containing oxide at a cut-off voltage, and a chemical formula of the sodium-containing oxide is LiₓNa₁₋ₓCo_{1-z}M_{z}O₂.

M includes a metal element or a non-metal element, 0.7 < x < 1 (for example, x is 0.71, 0.75, 0.8, 0.85, 0.9, 0.95, or 0.99), and 0.001 < z < 0.03 (for example, z is 0.0015, 0.005, 0.01, 0.015, 0.02, 0.025, or 0.029).

In the chemical formula LiₓNa₁₋ₓCo_{1-z}M_{z}O₂, when M includes a plurality of elements (≥2), z is a sum of atom quantities of the plurality of elements. For example, when M is Al and Mg, a sum of atom quantities of Al and Mg is 1.

In the present invention, during a phase transition process of the sodium-containing oxide from the initial voltage to the cut-off voltage, the first characteristic peak and the second characteristic peak are formed. The first characteristic peak is a characteristic peak of the sodium-containing oxide at the initial voltage (3 V), and the second characteristic peak is a characteristic peak of the sodium-containing oxide at the cut-off voltage (4.5 V). The angle range of the first characteristic peak is less than the angle range of the second characteristic peak. In this way, the sodium-containing oxide can release more lithium ions at a same voltage, thereby improving a capacity of the positive electrode material, and improving rate performance and cycling performance of the positive electrode material.

Specifically, a chemical formula of the sodium-containing oxide may be LiₓNa₁₋ₓCo_{1-z}M_{z}O₂. In an in-situ X-ray diffraction (XRD) pattern during a charge and discharge process of 3 V to 4.5 V, as shown in FIG. 1, it can be learned that the first characteristic peak, namely, the characteristic peak of the sodium-containing oxide at the initial voltage (3 V), is located in an angle range of 18.4° to 18.7°; and the second characteristic peak, namely, the characteristic peak of the sodium-containing oxide at the cut-off voltage (4.5 V), is located in an angle range of 18.7° to 19.5°. The second characteristic peak is located on the right side of the first characteristic peak, that is, the angle range of the first characteristic peak is less than the angle range of the second characteristic peak. Compared with a positive electrode material in the prior art, the improved positive electrode material in the present invention has a higher capacity.

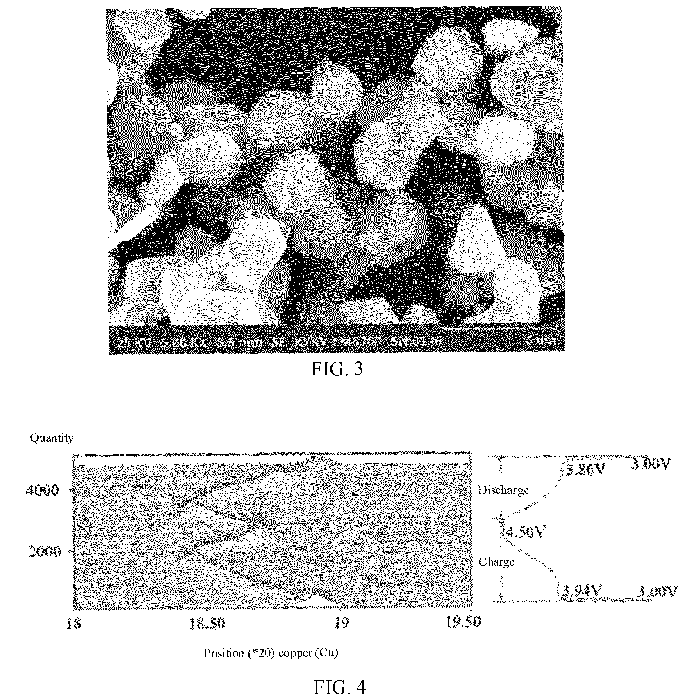

For example, as shown in FIG. 4, the positive electrode material in the prior art includes commercial lithium cobalt oxide. A result of an in-situ XRD test of the commercial lithium cobalt oxide during a charge and discharge process of 3 V to 4.5 V shows that there is only one peak with a position shift between 18.4° and 19° during the charge and discharge process, and there is no coexistence of two peaks, indicating that a main reaction during the charge and discharge process is a solid solution reaction of lithium ions insertion and extraction, without no more than two reversible phase transition reactions. After full charging to 4.5 V, the characteristic peak of the lithium cobalt oxide material at the cut-off voltage (4.5 V) is located on the left side of the characteristic peak of the lithium cobalt oxide material at the initial voltage (3 V). However, the second characteristic peak of the positive electrode material provided in the present invention is located on the right side of the first characteristic peak, so that the sodium-containing oxide in the positive electrode material provided in the present invention can release more lithium (about 80% of lithium ions) at the same voltage, while conventional lithium cobalt oxide can release only 70% of lithium ions at the same voltage. Therefore, compared with the prior art, the positive electrode material in the present invention improves its capacity at a same charging cut-off voltage.

In one example, the positive electrode material provided in the present invention can achieve a gram capacity of 202 mAh/g at 4.5 V, which is much higher than the conventional commercial lithium cobalt oxide material (186 mAh/g) at the same voltage.

In one example, during a charge and discharge process from the initial voltage to the cut-off voltage, the sodium-containing oxide includes a plurality of phase transitions, and the plurality of phase transitions are reversible phase transitions.

In the present invention, it can be learned from an in-situ XRD (as shown in FIG. 1) result that during the charge and discharge process from the initial voltage to the cut-off voltage, the sodium-containing oxide has a plurality of reversible phase transitions. These phase transitions are not only reversible, but also achieve a higher capacity at a lower voltage, thereby increasing a capacity of the positive electrode material at a same charge cut-off voltage while maintaining structural stability.

Each phase transition process in the plurality of phase transitions includes an equilibrium potential. In other words, a charge and discharge test was conducted on sodium-containing oxide LiₓNa₁₋ₓCo_{1-z}M_{z}O₂, where a test result was shown in FIG. 1 and FIG. 2, indicating that charge and discharge curves of the material has four charge-discharge plateaus within a voltage range of 3 V to 4.5 V. In comparison with in-situ XRD of a current commercial lithium cobalt oxide material (as shown in FIG. 4), charge and discharge curves of LiₓNa₁₋ₓCo_{1-z}M_{z}O₂ show that charge-discharge plateaus are exhibited respectively at 3.7 V to 3.8 V, 4.0 V to 4.15 V, 4.15 V to 4.25 V, and 4.4 V to 4.5 V, which are significantly different from the current commercial lithium cobalt oxide material. That LiₓNa₁₋ₓCo_{1-z}M_{z}O₂ exhibits a charge and discharge plateau, that is, the equilibrium potential, where the voltage remains constant. At the current voltage, a material content corresponding to a phase increases, allowing for extraction of some lithium ions during each phase transition. This improves a capacity of the positive electrode material.

In one example, a phase layered structure of the sodium-containing oxide includes a plurality of stacked repeating units, each of the repeating units presents a layered structure in which a first transition metal layer, a lithium oxygen layer, and a second transition metal layer are stacked, and transition metal and lithium atoms respectively occupy octahedral sites. A morphology of the sodium-containing oxide may be polycrystalline or monocrystalline.

Specifically, the LiₓNa₁₋ₓCo_{1-z}M_{z}O₂ material exhibits four reversible phase transitions in the in-situ XRD. The first phase transition is during charging from 3.7 V to 3.8 V, where a phase transition in which Li atoms in the material transition from octahedral sites to tetrahedral sites. The second phase transition is during charging from 4.0 V to 4.15 V, where continuous extraction of Li leads to a change in lattice parameters, resulting in a phase transition. The third phase transition is during charging from 4.15 V to 4.25 V, where Li reoccupies the octahedral sites and the lithium-cobalt layer undergoes interlayer sliding. The fourth phase transition is during charging from 4.4 V to 4.5 V, where a structural unit transitions from an alternating arrangement of six lithium-cobalt metal layers to an arrangement of two lithium-cobalt metal layers. During a discharge process, an angle change is consistent with that of the charge process, and the phase transition is completely reversible. After a complete charge and discharge process, the LiₓNa₁₋ₓCo_{1-z}M_{z}O₂ material can completely return to its original phase structure, reflecting good kinetic stability of the material during the charge and discharge process. The in-situ XRD shows that all phase transitions of the material between 3 V and 4.5 V are reversible phase transitions, and the material can maintain good structural stability during the charge and discharge process. The material has a plurality of reversible phase transitions at less than 4.6 V, and therefore can not only achieve a high capacity but also have good cycling performance. In addition, a structure of the material has a larger interlayer electrostatic repulsion due to coplanarity of a LiO₆ layer and a CoO₆ layer, so as to achieve a larger transition metal interlayer spacing than the lithium cobalt oxide in the prior art. Therefore, this is more conducive to rapid diffusion of Li ions between the layers, thereby achieving higher rate performance and improving a capacity of the positive electrode material.

In one example, during the charge and discharge process from the initial voltage to the cut-off voltage, at a first voltage range, the sodium-containing oxide compound coexists as a first phase and a second phase; at a second voltage range, the sodium-containing oxide compound coexists as a third phase and a fourth phase; and at a third voltage range, the sodium-containing oxide compound coexists as a fifth phase and a sixth phase. The first voltage range is from 3.7 V to 3.8 V; the second voltage range is from 4.15 V to 4.25 V; and the third voltage range is from 4.4 V to 4.5 V

In one example, during the charge process of the LiₓNa₁₋ₓCo_{1-z}M_{z}O₂ material, the first phase transition occurs during charging from 3 V to the first voltage range (for example, 3.7 V to 3.8 V), and two peaks coexist within a range of 17.6° to 18.7° in an XRD spectrum, that is, the first phase and the second phase coexist. The first phase may be a left peak at 17.6° to 18.2°, and the second phase may be a right peak at 18.4° to 18.7°, and as the charge process progresses, the left peak gradually strengthens, and the right peak gradually weakens until it disappears.

During continued charging of 4.0 V to 4.15 V, the enhanced left peak slowly shifts to the left, and the angle range may be from 17.7° to 18°, during which the second phase transition reaction occurs.

During continued charging to the second voltage range (which may be, for example, 4.15 V to 4.25 V), the third phase transition occurs, during which two peaks coexist, that is, the third phase and the fourth phase coexist. The third phase may be a left peak at 17.6° to 18.1°, and the fourth phase may be a right peak at 18.0° to 18.7°. The left peak gradually weakens until it disappears, and the right peak gradually strengthens. A peak position ranges from 17.6° to 18.7°.

During continued charging to the third voltage range (which may be, for example, 4.4 V to 4.5 V), the fourth phase transition occurs, and two peaks also coexist, that is, the fifth phase and the sixth phase coexist. The fifth phase may be a left peak located at 18° to 18.6°, and the sixth phase may be a right peak located at 18.7° to 19.5°. The left peak gradually weakens until it disappears, and the right peak gradually strengthens. A peak position change range is from 18° to 19.5°. This is completely reversible during the discharge process.

In comparison with in-situ XRD of a current commercial lithium cobalt oxide material, a result of an in-situ XRD test of the commercial lithium cobalt oxide during a charge and discharge process of 3 V to 4.5 V shows (as shown in FIG. 4) that there is only one peak with a position shift between 18.4° and 19° during the charge and discharge process of the current commercial lithium cobalt oxide material, and there is no coexistence of two peaks, indicating that a main reaction of a conventional positive electrode material during the charge and discharge process is a solid solution reaction of Li ions insertion and extraction, without no more than two reversible phase transition reactions. In addition, after full charging to 4.5 V, a peak position of the positive electrode material in the present invention is located on the right side of an initial state position, while a peak position of a conventional positive electrode material is located on the left side of an initial state position. This is because the positive electrode material in the present invention can release more Li (approximately 80% of Li ions) at the same voltage, while the conventional positive electrode material can release only 70% of Li ions at the same voltage. At the same charging cut-off voltage, a capacity of the positive electrode material is improved.

M includes at least one element of Al, Mg, Ti, Zr, Mn, Ni, B, P, Y, Te, Nb, W, K, or La.

It should be noted that the M element includes the foregoing metal element or non-metal element, and may also be another element that can form a covalent bond with an oxygen atom and embed into the LiₓNa₁₋ₓCo_{1-z}M_{z}O₂ lattice, such as a lanthanide element La/Y, and a same technical effect can be achieved. Details are not described herein.

A median particle size of the sodium-containing oxide may range from 3 µm to 30 µm (for example, is 3 µm, 5 µm, 10 µm, 15 µm, 20 µm, 25 µm, or 30 µm).

A specific surface area of the sodium-containing oxide may range from 0.2 m²/g to 1 m²/g (for example, is 0.2 m²/g, 0.3 m²/g, 0.4 m²/g, 0.5 m²/g, 0.6 m²/g, 0.7 m²/g, 0.8 m²/g, 0.9 m²/g, or 1 m²/g).

It should be noted that, in a case that the initial voltage is charged to a cut-off voltage of higher than 4.6 V for the sodium-containing oxide, phase transitions are also completely reversible. After a complete charge and discharge process, the sodium-containing oxide LiₓNa₁₋ₓCo_{1-z}M_{z}O₂ can completely return to its original phase structure, and kinetic stability is good during the charge and discharge process.

The following describes, based on a plurality of groups of experiments, effects of batteries prepared by using the positive electrode material provided in the present invention.

### Example 1

Preparation of sodium-containing oxide in a positive electrode material: A chemical formula of the sodium-containing oxide may be Li_{0.97}Na_{0.03}Co_{0.99}Al_{0.01}O₂. First, cobalt nitrate and aluminum sulfate were added to a solvent (such as deionized water) at a molar ratio of Co to Al of 0.99:0.01, and then 0.05 mol/L sodium hydroxide and ammonia water were added to adjust the pH to 6-10 so that the mixture formed a coprecipitate. The precipitate was sintered at 900°C for 20 hours in air atmosphere, and then the resulting product was processed by grinding and sieving to obtain a (Co_{0.99}Al_{0.01})₃O₄ material. Then, the (Co_{0.99}Al_{0.01})₃O₄ and Na₂CO₃ were uniformly mixed at a molar ratio of Na to Co of 0.76:0.99, and sintered in an oxygen atmosphere at 950°C for 36 hours to obtain Na_{0.76}Co_{0.99}Al_{0.01}O₂. Then the Na_{0.76}Co_{0.99}Al_{0.01}O₂ and LiCl were mixed and heated at 300°C to melt to finally obtain Li_{0.97}Na_{0.03}Co_{0.99}Al_{0.01}O₂.

### Example 2

Preparation of sodium-containing oxide in a positive electrode material: A chemical formula of the sodium-containing oxide may be Li_{0.95}Na_{0.05}Co_{0.99}Al_{0.1}O₂. First, cobalt nitrate and aluminum sulfate were added to a solvent (such as deionized water) at a molar ratio of Co to Al of 0.99:0.01, and then 0.05 mol/L sodium hydroxide and ammonia water were added to adjust the pH to 6-10 so that the mixture formed a coprecipitate. The precipitate was sintered at 900°C for 20 hours in air atmosphere, and then the resulting product was processed by grinding and sieving to obtain a (Co_{0.99}Al_{0.01})₃O₄ material. Then, the (Co_{0.99}Al_{0.01})₃O₄ and Na₂CO₃ were uniformly mixed at a molar ratio of Na to Co of 0.74:0.99, and sintered in an oxygen atmosphere at 850°C for 36 hours to obtain Na_{0.74}Co_{0.99}Al_{0.01}O₂. Then the Na_{0.74}Co_{0.99}Al_{0.01}O₂ and LiCl were mixed with Li/Na being 7, and heated at 300°C to melt to finally obtain Li_{0.95}Na_{0.05}Co_{0.99}Al_{0.01}O₂.

### Example 3

Preparation of sodium-containing oxide in a positive electrode material: A chemical formula of the sodium-containing oxide may be Li_{0.93}Na_{0.07}Co_{0.99}Al_{0.01}O₂. First, cobalt nitrate and aluminum sulfate were added to a solvent (such as deionized water) at a molar ratio of Co to Al of 0.99:0.01, and then 0.05 mol/L sodium hydroxide and ammonia water were added to adjust the pH to 6-10 so that the mixture formed a coprecipitate. The precipitate was sintered at 900°C for 20 hours in air atmosphere, and then the resulting product was processed by grinding and sieving to obtain a (Co_{0.99}Al_{0.01})₃O₄ material. Then, the (Co_{0.99}Al_{0.01})₃O₄ and Na₂CO₃ were uniformly mixed at a molar ratio of Na to Co of 0.72:0.99, and sintered in an oxygen atmosphere at 750°C for 36 hours to obtain Na_{0.72}Co_{0.99}Al_{0.01}O₂. Then the Na_{0.72}Co_{0.99}Al_{0.01}O₂ and LiCl were mixed with Li/Na being 5, and heated at 300°C to melt to finally obtain Li_{0.93}Na_{0.07}Co_{0.99}Al_{0.01}O₂.

### Example 4

Preparation of sodium-containing oxide in a positive electrode material: A chemical formula of the sodium-containing oxide may be Li_{0.92}Na_{0.08}Co_{0.99}Mg_{0.01}O₂. First, cobalt nitrate and magnesium sulfate were added to a solvent (such as deionized water) at a molar ratio of Co to Mg of 0.99:0.01, and then 0.05 mol/L sodium hydroxide and ammonia water were added to adjust the pH to 6-10 so that the mixture formed a coprecipitate. The precipitate was sintered at 900°C for 20 hours in air atmosphere, and then the resulting product was processed by grinding and sieving to obtain a (Co_{0.99}Mg_{0.1})₃O₄ material. Then, the (Co_{0.99}Mg_{0.01})₃O₄ and Na₂CO₃ were uniformly mixed at a molar ratio of Na to Co of 0.70:0.99, and sintered in an oxygen atmosphere at 750°C for 36 hours to obtain Na_{0.70}Co_{0.99}Mg_{0.01}O₂. Then the Na_{0.70}Co_{0.99}Mg_{0.01}O₂ and LiCl were mixed with Li/Na being 7, and heated at 300°C to melt to finally obtain Li_{0.92}Na_{0.08}Co_{0.99}Mg_{0.01}O₂.

### Example 5

Preparation of sodium-containing oxide in a positive electrode material: A chemical formula of the sodium-containing oxide may be Li_{0.95}Na_{0.05}Co_{0.99}Ni_{0.01}O₂. First, cobalt nitrate and nickel sulfate were added to a solvent (such as deionized water) at a molar ratio of Co to Ni of 0.99:0.01, and then 0.05 mol/L sodium hydroxide and ammonia water were added to adjust the pH to 6-10 so that the mixture formed a coprecipitate. The precipitate was sintered at 800°C for 20 hours in air atmosphere, and then the resulting product was processed by grinding and sieving to obtain a (Co_{0.99}Ni_{0.01})₃O₄ material. Then, the (Co_{0.99}Ni_{0.01})₃O₄ and Na₂CO₃ were uniformly mixed at a molar ratio of Na to Co of 0.72:0.99, and sintered in an oxygen atmosphere at 800°C for 36 hours to obtain Na_{0.72}Co_{0.99}Ni_{0.01}O₂. Then the Na_{0.72}Co_{0.99}Ni_{0.01}O₂ and LiCl were mixed with Li/Na being 10, and heated at 300°C to melt to finally obtain Li_{0.95}Na_{0.05}Co_{0.99}Ni_{0.01}O₂.

### Example 6

Preparation of sodium-containing oxide in a positive electrode material: A chemical formula of the sodium-containing oxide may be Li_{0.95}Na_{0.05}Co_{0.98}Al_{0.01}Mg_{0.01}O₂. First, cobalt nitrate, aluminum sulfate, and magnesium sulfate were added to a solvent (such as deionized water) at a molar ratio of Co to Al to Mg of 1.98: 0.01:0.01, and then 0.05 mol/L sodium hydroxide and ammonia water were added to adjust the pH to 6-10 so that the mixture formed a coprecipitate. The precipitate was sintered at 800°C for 20 hours in air atmosphere, and then the resulting product was processed by grinding and sieving to obtain a (Co_{0.98}Al_{0.01}Mg_{0.01})₃O₄ material. Then, the (Co_{0.08}Al_{0.01}Mg_{0.01})₃O₄ and Na₂CO₃ were uniformly mixed at a molar ratio of Na to Co of 0.72:1, and sintered in an oxygen atmosphere at 800°C for 36 hours to obtain Na_{0.72}Co_{0.98}Al_{0.01}Mg_{0.01}O₂. Then the Na_{0.72}Co_{0.98}Al_{0.01}Mg_{0.01}O₂ and LiCl were mixed with Li/Na being 10, and heated at 300°C to melt to finally obtain Li_{0.95}Na_{0.05}Co_{0.98}Ai_{0.98}Mg_{0.01}O₂.

### Example 7

Preparation of sodium-containing oxide in a positive electrode material: A chemical formula of the sodium-containing oxide may be Li_{0.97}Na_{0.03}Co_{0.98}Al_{0.01}Ni_{0.01}O₂. A preparation process of the sodium-containing oxide in Example 7 was the same as that in Example 1, except that the Ni element was added according to a molar ratio during coprecipitation.

### Example 8

Preparation of sodium-containing oxide in a positive electrode material: A chemical formula of the sodium-containing oxide may be Li_{0.97}Na_{0.03}Co_{0.98}Al_{0.01}Mg_{0.005}Ni_{0.005}O₂. A preparation process of the sodium-containing oxide in Example 8 was the same as that in Example 1, except that the Mg element and the Ni element were added according to a molar ratio during coprecipitation.

### Comparative Example 1

A commercial lithium cobalt oxide positive electrode material was prepared by a conventional synthesis method. The synthesis method was as follows: cobalt sulfate and aluminum sulfate were added to deionized water at a molar ratio of 0.99:0.01, and sodium carbonate and ammonia water were added as a precipitating agent and a complexing agent respectively to adjust the pH to 7-8 for precipitation. The precipitating agent was processed by sintering and grinding to obtain (Co_{0.99}Al_{0.01})₃O₄, and then was mixed with Li₂CO₃ according to a molar ratio of Li/Co of 1.01. The mixture was sintered at 900 °C in air for 12 hours to finally obtain a lithium cobalt oxide positive electrode material with a chemical formula of LiCo_{0.99}Al_{0.01}O₂.

### Comparative Example 2

A preparation method of a positive electrode material in Comparative Example 2 was the same as that in Comparative Example 1, except that the Mg element was added according to a molar ratio during coprecipitation, to finally obtain a lithium cobalt oxide positive electrode material with a chemical formula of LiCo_{0.98}Al_{0.01}Mg_{0.01}O₂.

### Comparative Example 3

A preparation method of a positive electrode material in Comparative Example 3 was the same as that in Comparative Example 1, except that the Mg element was added according to a molar ratio during coprecipitation, and the Ti element was added according to a molar ratio during sintering, to finally obtain a lithium cobalt oxide positive electrode material with a chemical formula of LiCo_{0.97}Al_{0.01}Mg_{0.01}Ti_{0.01}O₂.

### Comparative Example 4

A preparation method of a positive electrode material in Comparative Example 4 is the same as that in Comparative Example 1, except that Mg was added according to a molar ratio during coprecipitation, and Ti and Zr elements were added according to a molar ratio during sintering, to finally obtain a lithium cobalt oxide positive electrode material with a chemical formula of LiCo_{0.96}Al_{0.01}Mg_{0.01}Ti_{0.01}Zr_{0.01}O₂.

In Examples 1 to 8 and Comparative Examples 1 to 4, positive electrode plates were prepared in a same manner and assembled into lithium batteries. The lithium batteries were subjected to electrochemical tests. Electrochemical performance test results are shown below in Table 1.

**Table 1 Electrochemical performance test results**

| Sample | Chemical formula | 4.5 V capacity (mAh/g) | | | | 4.55 V capacity cycle | |
|---|---|---|---|---|---|---|---|
| | | 0.1C | 0.2C | 0.5C | 1C | 0.5C | 50T retention rate (%) |
| Example 1 | Li_{0.97}Na_{0.03}CO_{0.99}Al_{0.01}O₂ | 201.53 | 201.26 | 199.60 | 193.81 | 205.65 | 89.13 |
| Example 2 | Li_{0.95}Na_{0.05}Co_{0.90}Al_{0.0}O₂ | 198.96 | 198.82 | 198.57 | 197.46 | 206.47 | 89.06 |
| Example 3 | Li_{0.93}Na_{0.07}Co_{0.99}Al_{0.01}O₂ | 197.52 | 196.70 | 196.66 | 194.89 | 205.35 | 92.7 |
| Example 4 | Li_{0.92}Na_{0.08}Co_{0.99}Mg_{0.01}O₂ | 195.89 | 195.13 | 194.75 | 192.89 | 203.48 | 92.13 |
| Example 5 | Li_{0.95}Na_{0.05}Co_{0..99}Ni_{0.01}O₂ | 199.07 | 198.38 | 198.13 | 197.36 | 206.50 | 90.76 |
| Example 6 | Li_{0.9}5Na_{0.05}Co_{0.98}Al_{0.01}Mg_{0.01}O₂ | 199.07 | 198.38 | 198.13 | 197.36 | 206.50 | 92.14 |
| Example 7 | Li_{0.97}Na_{0.03}Co_{0.98}Al_{0.01}Ni_{0.01}O₂ | 200.65 | 200.56 | 199.57 | 198.67 | 208.73 | 88.84 |
| Example 8 | Li_{0.97}Na_{0.03}Co_{0.98}Al_{0.01}Mg_{0.005}Ni_{0.005}O2 | 200.28 | 200.42 | 199.53 | 198.48 | 207.48 | 89.9 |
| Comparative Example 1 | LiCo_{0.99}Al_{0.01}O₂ | 178.11 | 175.16 | 169.68 | 163.67 | 181.71 | 73.8 |
| Comparative Example 2 | LiCo_{0.98}Al_{0.01}Mg_{0.01}O₂ | 181.41 | 178.50 | 172.94 | 166.94 | 185.30 | 75.2 |
| Comparative Example 3 | LiCo_{0.97}Al_{0.01}Mg_{0.01}Ti_{0.01}O₂ | 182.26 | 179.22 | 173.71 | 167.64 | 182.87 | 78.5 |
| Comparative Example 4 | LiCo_{0.96}Al_{0.01}Mg_{0.01}Ti_{0.01}Z1_{0.01}O₂ | 180.56 | 177.76 | 172.17 | 166.23 | 181.79 | 82.5 |

It can be learned, from the table above, that a positive electrode material including LiₓNa₁₋ₓCo_{1-z}M_{z}O₂ provided in the present invention has a higher capacity and better C-rate and cycling performance at a same voltage than conventional commercial high-voltage lithium cobalt oxide.

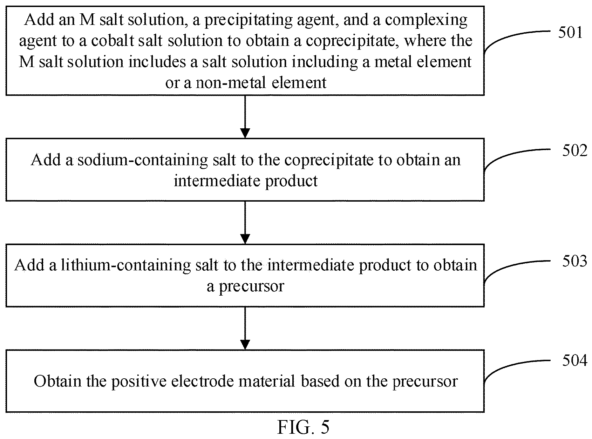

Refer to FIG. 5. FIG. 5 shows a preparation method of a positive electrode material according to the present invention. An embodiment of the present invention provides a preparation method of a positive electrode material, used for preparing the positive electrode material describe above. The method includes:
Step 501: Add an M salt solution, a precipitating agent, and a complexing agent to a cobalt salt solution to obtain a coprecipitate, where the M salt solution includes a salt solution including a metal element or a non-metal element.

In this step, the cobalt salt includes but is not limited to cobalt chloride, cobalt sulfate, cobalt nitrate, cobalt acetate, and the like, and the M salt may be nitrate, sulfate, oxalate, acetate, and the like. The cobalt salt and the M salt may be added at a preset ratio to deionized water, and then a precipitant and a complexing agent accounting for a total content ranging from 0.01 mol/L to 2 mol/L may be added, where the precipitating agent may be sodium hydroxide, and the complexing agent may be ammonia water, so that a molar ratio of the complexing agent to the precipitant is 0.1:2, the pH is adjusted to 6-10, and the mixture forms a coprecipitate.

Step 502: Add a sodium-containing salt to the coprecipitate to obtain an intermediate product.

In this step, the sodium-containing salt may be sodium carbonate, and a molar ratio of Co in the coprecipitate to Na in the sodium-containing salt of n:1 (0.69 < n < 0.78) is used for even mixing, the mixture is sintered in an oxygen atmosphere at 700°C to 1000°C for 24 hours to 36 hours to obtain the intermediate product.

Step 503: Add a lithium-containing salt to the intermediate product to obtain a precursor.

In this step, the intermediate product is mixed with a lithium-containing salt, and then heated to melt, where it is ensured that a molar ratio of Li/Na is 2: 10, and the lithium salt may be selected from one or more of lithium chloride, lithium bromide, lithium acetate, lithium carbonate, or lithium hydroxide. Finally, a precursor is obtained after heating at 100°C to 300°C. The precursor may sodium-containing oxide with a chemical formula of LiₓNa₁₋ₓCo_{1-z}M_{z}O₂.

Step 504: Obtain the positive electrode material based on the precursor.

In this step, the positive electrode material is mixed with a conductive agent, a binder, and the like to obtain a positive electrode slurry.

In the present invention, the sodium-containing oxide LiₓNa₁₋ₓCo_{1-z}M_{z}O₂ can maintain good structural stability during a charge and discharge process, and has a plurality of reversible phase transitions, so that the sodium-containing oxide can not only achieve a high capacity but also have good cycling performance. In addition, a structure of the material has a larger interlayer electrostatic repulsion due to coplanarity of a LiO₆ layer and a CoO₆ layer, so as to achieve a larger transition metal interlayer spacing. Therefore, this is more conducive to rapid diffusion of Li ions between the layers, thereby achieving higher rate performance and improving a gram capacity of the positive electrode material.

In one example, a molar ratio between Co and M in the cobalt salt solution and the M salt solution is (1-z):z, and the coprecipitate includes (Co_{1-z}M_{z})₃O₄, where 0.001 < z < 0.03; the intermediate product includes NaₘCo_{1-z}M_{z}O₂, where 0.65 < m < 1; and the precursor includes LiₓNa₁₋ₓCo_{1-z}M_{z}O₂, where 0.70 < x < 1.

The cobalt salt and the M salt may be at a molar ratio of Co to M (1-z):z, and are added to deionized water, and then a precipitating agent and a complexing agent accounting for a total content ranging from 0.01 mol/L to 2 mol/L are added to obtain a coprecipitate. The coprecipitate is sintered in an air atmosphere at 300°C to 900°C for 10 hours to 20 hours, and the product is processed by grinding and sieving to obtain a (Co_{1-z}M_{z})₃O₄ material, where 0.001 < z < 0.03, and a median particle size of the (CO_{1-z}M_{z})₃O₄ ranges from 3 µm to 30 µm. Then, the (Co_{1-z}M_{z})₃O₄ and Na₂CO₃ are evenly mixed at a molar ratio of Na to Co of n:1 (0.69 < n < 0.78), and sintered in an oxygen atmosphere at 700°C to 1000°C for 24 hours to 36 hours to obtain NaₘCo_{1-z}M_{z}O₂, where 0.65 < m < 1. The NaₘCo_{1-z}M_{z}O₂ and the lithium salt are mixed and heated to melt, so as to obtain LiₓNa₁₋ₓCo_{1-z}M_{z}O₂. The gram capacity of the positive electrode material is improved by adding the sodium-containing oxide LiₓNa₁₋ₓCo_{1-z}M_{z}O₂.

The present invention further provides a positive electrode plate, including a current collector and a coating layer disposed on the current collector, where the coating layer includes the positive electrode material in the present invention and/or a positive electrode material prepared by using the preparation method of a positive electrode material in the present invention.

In one example, the current collector is made of a metal foil, preferably an aluminum foil.

In one example, a thickness of the aluminum foil ranges from 6 µm to 10 µm (for example, is 6 µm, 7 µm, 8 µm, 9 µm, or 10 µm).

In one example, the coating layer includes the positive electrode material, and a positive electrode active material in the positive electrode material may include LiₓNa₁₋ₓCo_{1-z}M_{z}O₂.

In one example, a press density of the positive electrode plate may range from 3 g/cm³ to 4.5 g/cm³ (for example, is 3 g/cm³, 3.2 g/cm³, 3.5 g/cm³, 3.8 g/cm³, 4 g/cm³, 4.2 g/cm³, or 4.5 g/cm³).

In one example, the coating layer further includes a conductive agent and a binder. The binder may include one or more of polyvinylidene fluoride (PVDF), carboxymethyl cellulose (CMC), styrene-butadiene rubber (SBR), water-based acrylic resin, polytetrafluoroethylene (PTFE), ethylene-vinyl acetate copolymer (EVA), or polyvinyl alcohol (PVA). The conductive agent may include one or more of superconducting carbon, acetylene black, carbon black, Ketjen black, carbon dots, carbon nanotubes, graphene, or carbon nanofibers.

In one example, based on a total weight of the coating layer, a weight content of the positive electrode material ranges from 90wt% to 99wt%, a weight content of the conductive agent ranges from 0.5wt% to 5wt%, and a weight content of the binder ranges from 0.5 wt% to 5 wt%.

Specifically, the positive electrode material, the conductive agent, and the binder are dispersed in a solvent (such as N-methylpyrrolidone, NMP for short) to form a uniform coating layer, and the coating layer is coated on a positive electrode current collector. After drying and rolling processes, the positive electrode plate is obtained. During the charge and discharge process from an initial voltage to a cut-off voltage, the positive electrode material has a plurality of reversible phase transitions. These phase transitions are not only reversible, but also achieve a higher capacity at a lower voltage, thereby increasing a capacity of the positive electrode plate at a same charge cut-off voltage.

The present invention further provides a battery, including a positive electrode plate and a negative electrode plate, where the positive electrode plate includes the positive electrode material in the present invention and/or a positive electrode material prepared by using the preparation method of a positive electrode material in the present invention.

The battery may be a lithium-ion battery.

It should be noted that the implementations of the embodiment of the positive electrode material described above is also applicable to the embodiment of the battery and a same technical effect can be achieved. Details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in embodiments of the present invention is not limited to performing the functions in the order discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

The foregoing describes embodiments of the present invention with reference to the accompanying drawings. However, the present invention is not limited to these specific embodiments. The specific embodiments are merely illustrative rather than restrictive. Inspired by the present invention, persons of ordinary skill in the art may develop many other manners without departing from the principle of the present invention and the protection scope of the claims, and all such manners fall within the protection scope of the present invention.

## Claims

1. A positive electrode material, **characterized in that** the positive electrode material comprises a sodium-containing oxide, an angle range of a first characteristic peak of the sodium-containing oxide is less than an angle range of a second characteristic peak, the first characteristic peak is a characteristic peak of the sodium-containing oxide at an initial voltage, the second characteristic peak is a characteristic peak of the sodium-containing oxide at a cut-off voltage, and a chemical formula of the sodium-containing oxide is LiₓNa₁₋ₓCo_{1-z}M_{z}O₂;
wherein M comprises a metal element or a non-metal element, 0.7 < x < 1, and 0.001 < z < 0.03.

2. The positive electrode material according to claim 1, **characterized in that** in an in-situ X-ray diffraction pattern during a charge and discharge process of 3 - 4.5 V, the first characteristic peak is the characteristic peak of the sodium-containing oxide at the initial voltage 3 V, is located in an angle range of 18.4° to 18.7°; and the second characteristic peak is the characteristic peak of the sodium-containing oxide at the cut-off voltage 4.5 V, is located in an angle range of 18.7° to 19.5°; and/or
the second characteristic peak is located on the right side of the first characteristic peak, that is, the angle range of the first characteristic peak is less than the angle range of the second characteristic peak.

3. The positive electrode material according to claim 1 or 2, **characterized in that** during a charge and discharge process from the initial voltage to the cut-off voltage, the sodium-containing oxide comprises a plurality of phase transitions, and the plurality of phase transitions are reversible phase transitions.

4. The positive electrode material according to any one of claims 1 to 3, **characterized in that** each phase transition in the plurality of phase transitions comprises an equilibrium potential.

5. The positive electrode material according to any one of claims 1 to 4, **characterized in that** the during the charge and discharge process from the initial voltage to the cut-off voltage, at a first voltage range, the sodium-containing oxide compound coexists as a first phase and a second phase; at a second voltage range, the sodium-containing oxide compound coexists as a third phase and a fourth phase; and at a third voltage range, the sodium-containing oxide compound coexists as a fifth phase and a sixth phase.

6. The positive electrode material according to any one of claims 1 to 5, **characterized in that** a phase layered structure of the sodium-containing oxide comprises a plurality of stacked repeating units, each of the repeating units presents a layered structure in which a first transition metal layer, a lithium oxygen layer, and a second transition metal layer are stacked, and transition metal and lithium atoms respectively occupy octahedral sites.

7. The positive electrode material according to any one of claims 1 to 6, **characterized in that** M comprises at least one element of Al, Mg, Ti, Zr, Mn, Ni, B, P, Y, La, Te, Nb, W, K, or La.

8. The positive electrode material according to any one of claims 1 to 7, **characterized in that** a median particle size of the sodium-containing oxide ranges from 3 µm to 30 µm.

9. The positive electrode material according to any one of claims 1 to 8, **characterized in that** a specific surface area of the sodium-containing oxide ranges from 0.2 m²/g to 1 m²/g.

10. A preparation method of a positive electrode material, used for preparing the positive electrode material according to any one of claims 1 to 9, **characterized in that** the method comprises:
adding an M salt solution, a precipitating agent, and a complexing agent to a cobalt salt solution to obtain a coprecipitate, wherein the M salt solution comprises a salt solution comprising a metal element or a non-metal element;
adding a sodium-containing salt to the coprecipitate to obtain an intermediate product;
adding a lithium-containing salt to the intermediate product to obtain a precursor; and
obtaining the positive electrode material based on the precursor.

11. The method according to claim 10, **characterized in that** a molar ratio between Co and M in the cobalt salt solution and the M salt solution is (1-z):z, and the coprecipitate comprises (Co_{1-z}M_{z})₃O₄, wherein 0.001 < z < 0.03; the intermediate product comprises NaₘCo_{1-z}M_{z}O₂, wherein 0.65 < m < 1; and the precursor comprises LiₓNa₁₋ₓCo₁₋zM_{z}O2, wherein 0.7 < x < 1.

12. A positive electrode plate, **characterized in that** the positive electorde plate comprises a current collector and a coating layer disposed on the current collector, wherein the coating layer comprises the positive electrode material according to any one of claims 1 to 9 and/or a positive electrode material prepared by using the method according to claim 10 or 11.

13. The positive electrode plate according to claim 12, **characterized in that** the coating layer further comprises a conductive agent and a binder; and based on a total weight of the coating layer, a weight content of the positive electrode material ranges from 90 wt% to 99 wt%, a weight content of the conductive agent ranges from 0.5 wt% to 5 wt%, and a weight content of the binder ranges from 0.5 wt% to 5 wt%.

14. A battery, **characterized in that** the battery comprises a positive electrode plate and a negative electrode plate, wherein the positive electrode plate comprises the positive electrode material according to any one of claims 1 to 9 and/or a positive electrode material prepared by using the method according to claim 10 or 11.

15. The battery according to claim 14, the battery is a lithium-ion battery.
